# EUROPÄISCHE PATENTSCHRIFT

(11) **EP 4 577 738 B1**
(45) Veröffentlichungstag und Bekanntmachung des Hinweises auf die Patenterteilung: **29.04.2026**
(21) Anmeldenummer: 23761513.3
(22) Anmeldetag: 23.08.2023
(51) Int. Cl.: F03D 1/06, F03D 80/00

(54) **ROTORBLATT FÜR EINE WINDENERGIEANLAGE SOWIE ROTORBLATTSPITZE**
ROTOR BLADE FOR A WIND TURBINE, AND ROTOR BLADE TIP
PALE DE ROTOR POUR UNE ÉOLIENNE, ET POINTE DE PALE DE ROTOR

(30) Priorität: 25.08.2022 DE 102022121502
(43) Veröffentlichungstag der Anmeldung: 02.07.2025
(73) Patentinhaber: Nordex Energy SE & Co. KG, 22419 Hamburg (DE)
(72) Erfinder: DOOSTTALAB, Mehdi, 22419 Hamburg (DE)
(74) Vertreter: Epping - Hermann - Fischer
(86) Internationale Anmeldenummer: PCT/EP2023/073110
(87) Internationale Veröffentlichungsnummer: WO 2024/042116

(56) Entgegenhaltungen:
- EP-A2- 2 320 075
- US-A1- 2007 025 858
- US-A1- 2012 141 274

## Beschreibung

Die Erfindung betrifft ein Rotorblatt für eine Windenergieanlage, welches einen Rotorblatthauptkörper, eine an den Rotorblatthauptkörper anschließende Rotorblattspitze, eine saugseitige Oberfläche und eine druckseitige Oberfläche aufweist. Darüber hinaus betrifft die Erfindung eine Rotorblattspitze für ein Rotorblatt.

Windenergieanlagen werden verwendet, um Energie des Windes in elektrische Energie umzuwandeln. Dazu weisen sie herkömmlich ein oder mehrere Rotorblätter (auch bezeichnet als Windenergieanlagenrotorblätter) auf.

Rotorblätter können mit aerodynamisch wirksamen Anbauelementen versehen sein, um die das Windenergieanlagenrotorblatt im Betrieb umströmende Luft gezielt zu beeinflussen. Bekannt sind beispielsweise Anbauelemente, die entlang der Profilendkante angeordnet sind und die aerodynamischen Eigenschaften des Blattes mit Hilfe von Zacken verbessern. Diesbezüglich sei beispielhaft auf die Veröffentlichungen DE 10 2011 052 930 A1 oder WO 2017/148669 A1 verwiesen.

Während des Patenterteilungsverfahrens wurden u.a. folgende Dokumente betrachtet: US 2007/025858 A1 und US 2012/141274 A1.

Dem aktuellen Trend folgend werden bei modernen Windenergieanlagen immer längere Rotorblätter eingesetzt, die beispielsweise jeweils ein Gewicht von bis zu 35 Tonnen und eine Länge von bis zu 90 Metern aufweisen können. Gerade bei solch langen Rotorblättern kommt es typischerweise zu einem besonders hohen Anstellwinkelschwung, der durch die Rotorblattrotation und die damit verbundene Änderung des sogenannten Anstellwinkels an der Rotorblattspitze entsteht. Dies liegt insbesondere daran, dass solch lange Rotorblätter in der Regel deutlich flexibler sind im Vergleich zu kleineren, insbesondere kürzeren Rotorblättern (beispielsweise 60 m lang). Dieses Phänomen führt zu einem Strömungsabriss der Luft im Betrieb, welcher ursächlich für die Entstehung ungewünschter Geräusche bzw. Lärm ist.

Eine Aufgabe, die der Erfindung zugrunde liegt, ist es, ein Rotorblatt und eine Rotorblattspitze anzugeben, welche zu einer besonders wirksamen Reduktion von Geräuschen oder gar deren gänzlicher Vermeidung beiträgt.

Gelöst wird die Aufgabe durch die nebengeordneten Ansprüche.

Gemäß einem Aspekt wird ein Rotorblatt für eine Windenergieanlage offenbart. Das Rotorblatt weist einen Rotorblatthauptkörper, eine an den Rotorblatthauptkörper anschließende Rotorblattspitze, eine saugseitige Oberfläche, eine druckseitige Oberfläche und eine Profilendkante auf. Stromabwärtige Kanten der saugseitigen Oberfläche und der druckseitigen Oberfläche sind an der Profilendkante miteinander verbunden. Die Rotorblattspitze weist ein flexibel ausgebildetes Endkantenelement auf, welches bezüglich seiner Formgebung bündig an die äußere Kontur der saugseitigen Oberfläche und der druckseitigen Oberfläche des Rotorblattes angepasst ist und einen Abschnitt der Profilendkante des Rotorblattes bildet, so dass die Profilendkante des Rotorblatts an der Rotorblattspitze, zumindest der Abschnitt der Profilendkante, in Richtung eines spitzenseitigen Endes des Rotorblatts monoton verläuft.

Die Erfindung sieht an der Rotorblattspitze ein bündig in die äußere Kontur des Rotorblattes eingepasstes Endkantenelement vor, welches derart flexibel ausgebildet ist, dass es sich unter Einfluss der Luftströmung während des bestimmungsgemäßen Betriebs des Rotorblatts verformen kann. Beispielsweise kann es entsprechend der Luftströmung in Richtung der Saugseite oder in Richtung Druckseite nachgeben oder sich verbiegen. Mit anderen Worten ermöglicht das Endkantenelement eine Änderung des Profilquerschnitts im Bereich der Profilendkante bzw. eines Profilendkantenabschnitts, wobei dieser strömungsabhängig seine Ausrichtung (in Profildickenrichtung) zumindest teilweise verändert. Durch Verwendung einer solch flexiblen Profilendkante wird ein besonders effektiver Druckausgleich zwischen der Druckseite und der Saugseite ermöglicht. Weiterhin wird dazu beigetragen, dass sich eine Strömungsablösung auf der Druck- und/oder Saugseite nicht oder weniger leicht bildet. Weiter wird durch den verbesserten Druckausgleich dazu beigetragen, dass die Größe von sogenannten Rotorblattspitzenwirbeln verringert ist, welche eine weitere Lärmquelle für eine Windenergieanlage darstellen. Die Erfindung ermöglicht somit den aeroakustischen Lärm an der Rotorblattspitze zu reduzieren oder zu vermeiden, insbesondere bei besonders langen Rotorblättern.

Die Rotorblattspitze kann als ein Abschnitt des Rotorblatts verstanden werden. Beispielsweise definieren Rotorblattspitze und Rotorblatthauptkörper zwei (Längs-)Abschnitte des Rotorblatts. Die Rotorblattspitze kann gleich wie der Rotorblatthauptkörper aufgebaut sein. In einem Vergleichsbeispiel ist die Rotorblattspitze einstückig mit dem Rotorblatthauptkörper ausgebildet.

Die Rotorblattspitze ist ein zu dem Rotorblatthauptkörper separates Bauteil. Die Rotorblattspitze hat in diesem Fall einen zum Hauptkörper unterschiedlichen Aufbau und / oder sie kann einem anderen Werkstoff hergestellt sein. Beispielsweise ist die Rotorblattspitze aus einem metallischen Werkstoff gefertigt. Beispielsweise ist die Rotorblattspitze als ein Blitzrezeptor ausgebildet, wobei die Rotorblattspitze für diesen Fall beispielsweise aus dem Aluminiumwerkstoff gefertigt ist.

Alternativ ist die Rotorblattspitze als ein Rotorblattsegment eines (quer zur Längsachse) geteilten Rotorblattes ausgebildet. In diesem Fall sind Rotorblattspitze und Rotorblatthauptkörper beispielswiese gleich oder gleichartig aufgebaut. Sie können auch unterschiedlich aufgebaut sein.

Die Rotorblattspitze, gleich welcher der oben angegebenen Ausgestaltungen, hat beispielswiese eine Länge von bis zu 10%, besonders bevorzugt von 0 bis 3%, der Gesamtlänge des Rotorblatts bezogen auf eine Längsachse des Rotorblattes (d.h. von der Rotorblattwurzel bis zum spitzenseitigen Ende des Rotorblatts). Die Rotorblattspitze hat im vorliegenden Kontext stets eine axiale Ausdehnung entlang der Längsachse des Rotorblattes und definiert beispielsweise keinen Punkt oder einen Endpunkt des Rotorblattes.

Die Rotorblattspitze ist ein Bestandteil des Rotorblatts und weist das erfindungsgemäße Endkantenelement auf. Bei dem Endkantenelement handelt es sich um ein zu der Rotorblattspitze separates Element. Für das Endkantenelement hat die Rotorblattspitze beispielsweise einen zurückgesetzten Bereich (von der Profilendkante ausgehend) oder eine Aussparung, so dass das Endkantenelement bündig in die äußere Kontur des Rotorblatts eingesetzt ist. Mit anderen Worten schließt das Endkantenelement zumindest an Saug- und Druckseite bündig zum restlichen Rotorblatt bzw. der restlichen Rotorblattspitze ab. Bevorzugt schließt das Endkantenelement an allen Außenseiten bündig mit dem Rotorblatt ab, so dass überall an der äußeren Kontur ein nahtloser Übergang gegeben ist.

Die flexible Ausgestaltung bedeutet, dass das Endkantenelement im Vergleich zum restlichen Rotorblatt bzw. der Rotorblattspitze eine größere elastische Verformbarkeit aufweist.

Der monotone Verlauf der durch das Endkantenelement definierten Profilendkante an der Rotorblattspitze bedeutet, dass der Verlauf gleichbleibt oder in gleicher Richtung ändert, beispielsweise bezogen auf die Längsachse des Rotorblattes. Beispielsweise ist der Verlauf gekrümmt, wobei keine Richtungsänderung der Krümmung stattfindet. Mit anderen Worten bildet das Endkantenelement keinen Profilendkantenabschnitt mit welligem, zackigem oder sonst wie alternierenden Verlauf aus.

Die Profilendkante ist die am weitesten in Strömungsrichtung leeward liegende Kante des Rotorblatts. Bei den Kanten der saugseitigen Oberfläche bzw. druckseitigen Oberfläche handelt es sich somit um die diejenigen Kanten, die während des bestimmungsgemäßen Betriebs des Rotorblatts bezüglich des Luftstromes am weitesten stromabwärts liegen.

Gemäß einer Ausführungsform ist zwischen dem Endkantenelement und dem restlichen Rotorblatt entlang der Profilendkante ein im Wesentlichen nahtloser, insbesondere stufenloser, Übergang ausgebildet. Dadurch übernimmt das Endkantenelement nahtlos den Verlauf der Profilendkante des restlichen Rotorblattes im Bereich der Rotorblattspitze. Mit anderen Worten setzt das Endkantenelement der Verlauf der Profilendkante nahtlos fort. Dies trägt besonders vorteilhaft zu den aeroakustischen Eigenschaften des Rotorblattes an der Rotorblattspitze bei.

Das Endkantenelement ist frei von einer Profiltiefen-Erweiterung an der Profilendkante. Eine sogenannte Chord-Verlängerung (englisch "chord extension) des Rotorblattes an der Rotorblattspitze ist damit nicht umfasst. Dies trägt zu den genannten aeroakustischen Eigenschaften des Rotorblattes an der Rotorblattspitze bei.

Gemäß einer Ausführungsform weist der durch das Endkantenelement gebildete Abschnitt der Profilendkante des Rotorblatts eine Krümmung auf, die sich monoton ändert. Dies ermöglicht die oben genannten Vorteile und Funktionen.

Gemäß einer Ausführungsform ist das Endkantenelement aus einem Elastomer-Werkstoff gebildet. Damit ist ein flexibler, elastischer Kunststoffwerkstoff vorgesehen. Beispielsweise handelt es sich um einen Gummi, PU (Polyurethan), PU-Mischung/Hybrid, der bei Temperaturschwankung flexibel bleibt.

Die Rotorblattspitze ist separat zu dem Rotorblatthauptkörper ausgebildet und mit dem Rotorblatthauptkörper verbunden. Dies ermöglicht eine separate Fertigung der Rotorblattspitze. Beispielsweise ist eine separate Anbringung bzw. Montage des Endkantenelements möglich. Auch wird dazu beigetragen, dass das Endkantenelement, etwa bei Verschleiß, besonders gut ausgetauscht werden kann.

Gemäß einer Ausführungsform ist die Rotorblattspitze aus einem elektrisch leitfähigen Material, insbesondere einem Metallwerkstoff, gebildet. Dies trägt besonders vorteilhaft zu einer Montage des Endkantenelements bei, da besonders exakte Geometrien, Flächen und dergleichen für die Montage des Endkantenelements bereitgestellt werden können. Weiterhin wird dadurch ein Austauschen des Endkantenelements erleichtert.

Gemäß einer Ausführungsform ist das Endkantenelement mittels Formschluss an der Rotorblattspitze festgelegt. Dies trägt zu den oben genannten Vorteilen und Effekten bei.

Gemäß einer Ausführungsform ist das Endkantenelement über ein Schienensystem, eine Feder-Nut Verbindung oder eine Schwalbenschwanzverbindung an der Rotorblattspitze festgelegt. Dies trägt zu den oben genannten Vorteilen und Effekten bei, wie etwa der leichten Austauschbarkeit im Falle von Verschleiß.

Gemäß einer Ausführungsform verläuft die Profilendkante des Rotorblatts entlang einer Längsachse des Rotorblatts ausgehend von einer Position maximaler Profiltiefe bis zum spitzenseitigen Ende monoton. Dadurch werden besonders gute aeroakustische Eigenschaften des Rotorblattes ermöglicht.

Gemäß einem weiteren Aspekt wird eine Rotorblattspitze für ein Rotorblatt einer Windenergieanlage beschrieben, wobei die Rotorblattspitze separat zu einem Rotorblatthauptkörper des Rotorblatts und mit dem Rotorblatthauptkörper verbindbar ausgebildet ist. Die Rotorblattspitze weist ein flexibel ausgebildetes Endkantenelement auf, welches bezüglich seiner Formgebung bündig an eine äußere Kontur einer saugseitigen Oberfläche und einer druckseitigen Oberfläche der Rotorblattspitze angepasst ist und ausgebildet ist, einen Abschnitt der Profilendkante des Rotorblattes zu bilden, wobei der Verlauf des Abschnitts der Profilendkante monoton ist.

Die Rotorblattspitze ermöglicht im Wesentlichen die oben genannten Vorteile und Funktionen.

Weitere Vorteile, Merkmale und Weiterbildungen ergeben sich aus der nachfolgenden, in Verbindung mit den Figuren erläuterten Beschreibung von Ausführungsbeispielen. Gleiche, gleichartige oder gleichwirkende Elemente können in den Figuren mit den gleichen Bezugszeichen versehen sein.

In den Figuren zeigen:
Figur 1 eine schematische Darstellung einer Windenergieanlage gemäß einem Ausführungsbeispiel,
Figur 2 eine schematische Darstellung eines Rotorblatts der Windenergieanlage,
Figur 3 eine schematische Darstellung eines Querschnittsprofils einer herkömmlichen Rotorblattspitze,
Figur 4 eine schematische Aufsicht auf ein Rotorblatt an der Rotorblattspitze gemäß einem Ausführungsbeispiel der Erfindung,
Figur 5 eine schematische Darstellung eines Querschnittsprofils der Rotorblattspitze gemäß Figur 4, und
Figuren 6 und 7 schematische Darstellungen einer Anbindung eines Endkantenelements an der Rotorblattspitze gemäß zwei Ausführungsbeispielen der Erfindung.

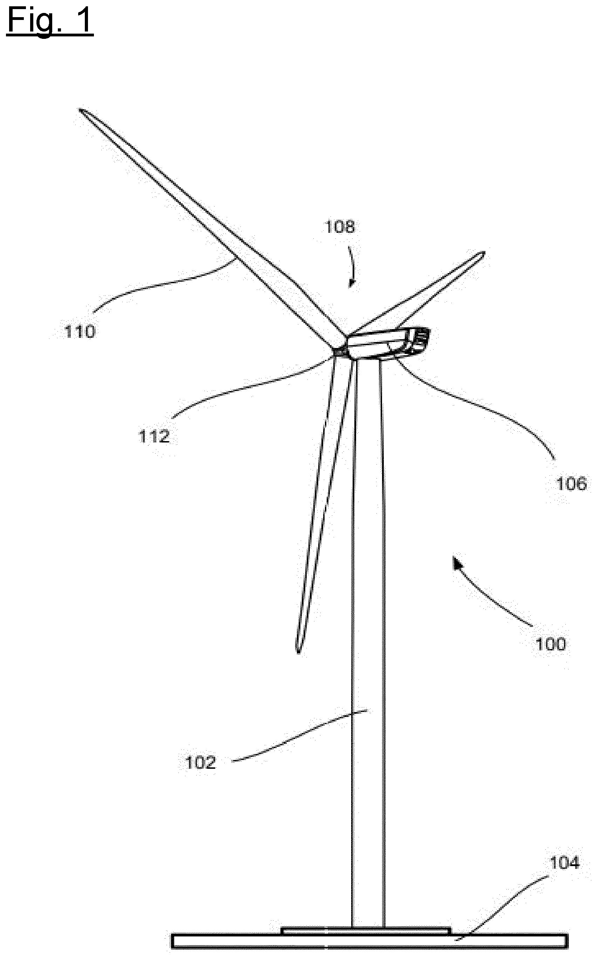

Figur 1 zeigt eine schematische Darstellung einer Windenergieanlage 100. Die Windenergieanlage 100 weist einen Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere (Windenergieanlagen)Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

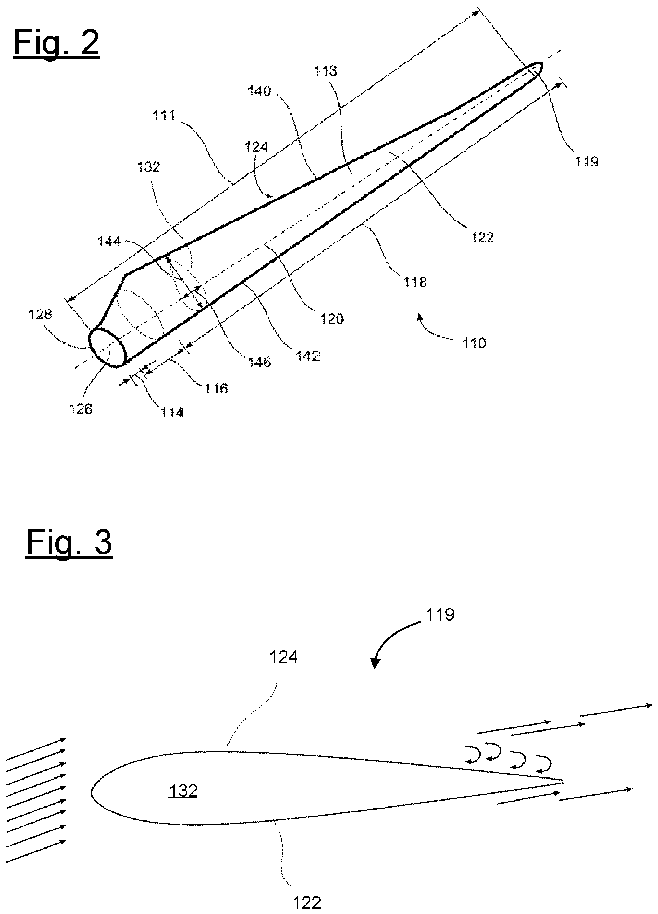

Figur 2 zeigt schematisch ein Rotorblatt 110. Das Rotorblatt 110 weist die Form eines herkömmlichen Rotorblattes auf und ist durch einen Rotorblatthauptkörper 111 sowie eine Rotorblattspitze 119 gebildet. Die Rotorblattspitze 119 ist als ein separates Element ausgeführt. Die Rotorblattspitze 119 ist über eine Klebverbindung fest mit dem Rotorblatthauptkörper 111 verbunden. Selbstredend kann die Rotorblattspitze 119 andersartig mit dem Rotorblatthauptkörper 111 verbunden sein. Der Rotorblatthauptkörper 111 ist durch zwei miteinander verbundene Halbschalen aus Faserverbundwerkstoff gebildet und im Inneren im Wesentlichen hohl ausgebildet, wobei er einen Rotorblatthohlraum 113 begrenzt. Das Rotorblatt 110 hat einen Rotorblattwurzelbereich 114, der der Rotornabe 112 zugewandt ist. Der Rotorblattwurzelbereich 114 hat typischerweise einen im Wesentlichen kreisrunden Querschnitt. An den Rotorblattwurzelbereich 114 schließen sich ein Übergangsbereich 116 und ein Profilbereich 118 des Rotorblatts 110 an. Das Rotorblatt 110 hat bezüglich einer Längserstreckungsrichtung 120 eine Druckseite 122 (vorliegend auch druckseitige Oberfläche) und eine gegenüberliegende Saugseite 124 (saugseitige Oberfläche). Im Rotorblattwurzelbereich 114 ist ein Rotorblattanschlussende 126 mit einem Flanschanschluss 128 vorgesehen, mittels welchem das Rotorblatt 110 mit einem Pitchlager oder einem Extender mechanisch verbunden wird.

Die Profilendkante 140 und die Profilnasenkante 142 des Rotorblatts 110 werden von den Profilendkanten und den Profilnasenkanten sowohl der Rotorblatthauptkörper 111 als auch der Rotorblattspitze 119 gebildet. Eine Profiltiefe 144 ist als Abstand von der Profilendkante 140 zur Profilnasenkante 142 bezüglich eines Profilquerschnitts 132 definiert. Eine Profildicke 146 ist als ein Abstand von der Druckseite 122 zur Saugseite 124 definiert, wobei im vorliegenden Kontext die maximale Profildicke des entsprechenden Profilquerschnitts 132 gemeint sein soll. Die Profildicke 146 wird rechtwinklig zur Längsachse 120 und zur Profiltiefe 144 gemessen. Ein (Profil-)Querschnitt liegt in einer Ebene normal zur Längsachse 120.

Figur 3 zeigt exemplarisch einen Profilquerschnitt 132 an der Rotorblattspitze 119 eines herkömmlichen Rotorblattes. Gerade bei langen Rotorblättern kann es im Bereich der Profilendkante 140 zu unerwünschten Geräuschen aufgrund Strömungsabrissen und Verwirbelungen der Luft kommen (angedeutet durch die Pfeile).

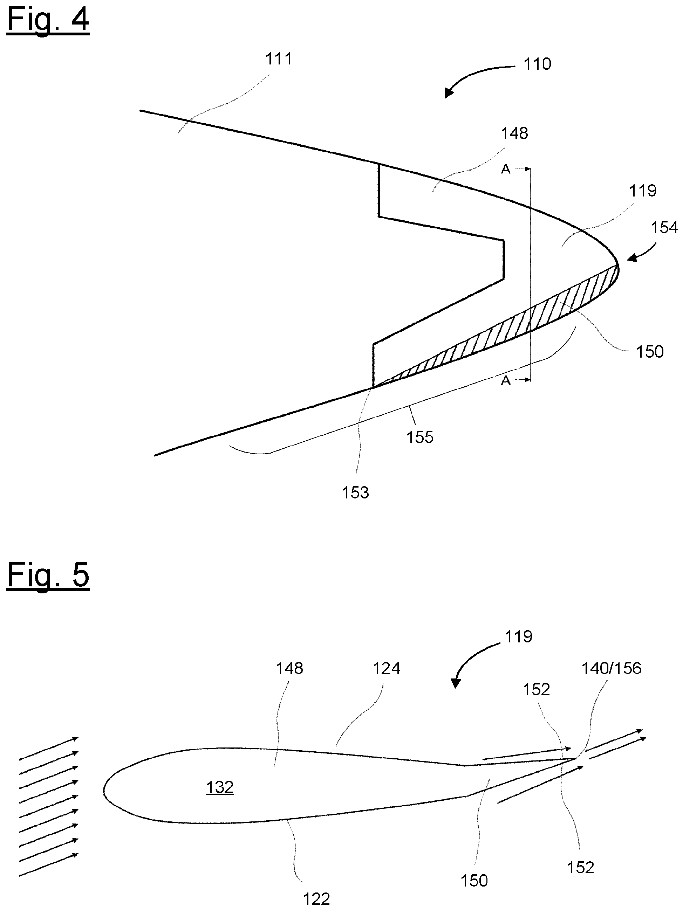

Figuren 4 und 5 betreffen eine Rotorblattspitze 119 gemäß einem Ausführungsbeispiel der Erfindung. Figur 5 zeigt den Schnitt A-A gemäß der in Figur 4 eingezeichneten Schnittebene. Die Rotorblattspitze 119 ist separat zum Rotorblatthauptkörper 111 ausgebildet. Die Rotorblattspitze 119 ist durch einen Spitzenhauptkörper 148 und ein Endkantenelement 150 gebildet, die miteinander mechanisch sicher verbunden sind. Das Endkantenelement 150 ist elastisch ausgebildet und damit flexibel verformbar. Figur 5, die einen Profilquerschnitt 132 an der Rotorblattspitze 119 darstellt, zeigt, dass die stromabwärtigen Kanten 152 der saugseitigen Oberfläche 124 und der druckseitigen Oberfläche 122 über die Profilendkante 140 verbunden sind. Das Endkantenelement 150 ist bezüglich seiner Formgebung bündig an die äußere Kontur der saugseitigen Oberfläche 124 und der druckseitigen Oberfläche 122 des Rotorblattes 110 angepasst und bildet einen Abschnitt 156 der Profilendkante 140 des Rotorblattes 110. Zwischen dem Endkantenelement 150 und dem restlichen Rotorblatt 110 ist entlang der Profilendkante 140 ein im Wesentlichen nahtloser, insbesondere stufenloser, Übergang 153 ausgebildet. Insbesondere ist der bündige Übergang 153 zwischen Rotorblatthauptkörper 111 und Endkantenelement 150 vorgesehen.

Durch die vollständig bündige Einpassung des Endkantenelements 150 in das Rotorblatt 110 bzw. dessen äußere Hülle ist erreicht, dass die die Profilendkante 140 des Rotorblatts 110 an der Rotorblattspitze 119 in Richtung eines spitzenseitigen Endes 154 des Rotorblatts 110 monoton verläuft. Mit anderen Worten verläuft eine Krümmung 155 (bezogen auf die Richtung der Rotorblattlängsachse 120) der Profilendkante 140 an der Rotorblattspitze 119 monoton. Durch die flexible Ausgestaltung des Endkantenelements 150 kann sich dieses an Luftströmungen anpassen, wie Figur 5 andeutet. Damit ist die Profilendkante 140 bzw. der Abschnitt 156 an der Rotorblattspitze 119 flexible, d.h**.** beweglich. Dies ermöglicht die eingangs genannten Vorteile und Funktionen. Eine Erweiterung der Profiltiefe 144 (sogenannte "chordextension") ist mit dem Endkantenelement 150 nicht bewirkt.

Mit Blick auf das in Figur 2 dargestellte Rotorblatt 110 ist besonders bevorzugt vorgesehen, dass der Verlauf der Profilendkante 140 des Rotorblatts 110 über einen besonders großen Längsabschnitt, beispielsweise ausgehend von 50 % der Gesamtlänge (aus Richtung des Rotorblattwurzelbereichs 114 kommend) bis hin zum spitzenseitigen Ende 154 monoton verläuft.

Der Spitzenhauptkörper 148 ist aus einem Metallwerkstoff, etwa Aluminium bzw. einem Aluminiumwerkstoff, gebildet. Das Endkantenelement 150 ist beispielsweise aus einem Kunststoffwerkstoff wie Polyurethan gebildet und weist einen E-Modul im Bereich von 0,01 bis 1,5 auf. Insbesondere ist das Endkantenelement 150 flexibler als das restliche Rotorblatt 110 und insbesondere als der Spitzenhauptkörper 148 ausgebildet.

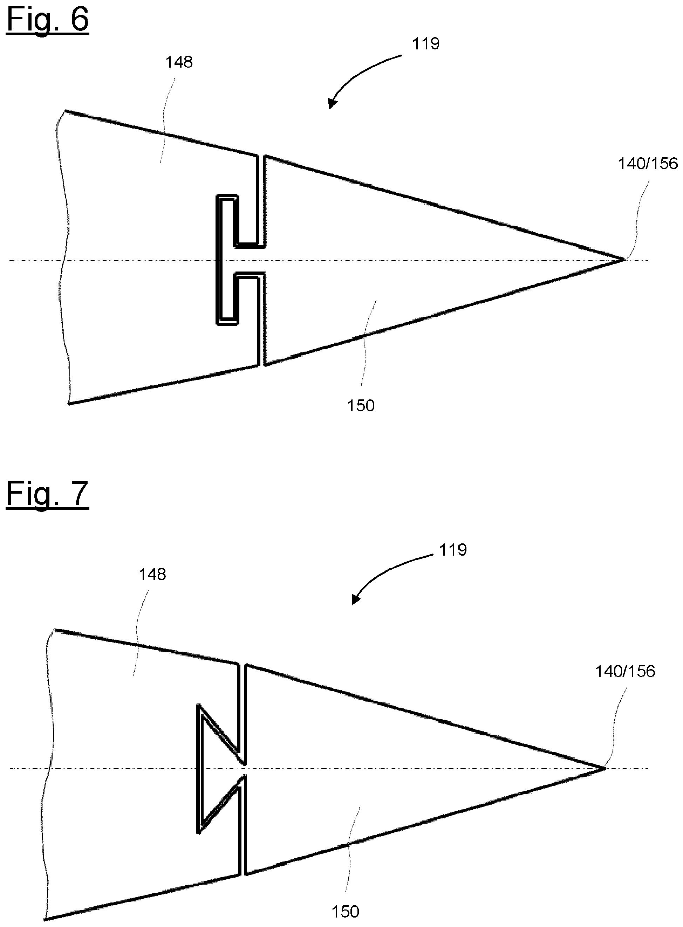

Das Endkantenelement 150 kann auf verschiedene Weise an der Rotorblattspitze 119, d.h**.** dem Spitzenhauptkörper 148 angebunden sind. Bevorzugt ist das Endkantenelement 150 formschlüssig mit dem Spitzenhauptkörper 148 verbunden. Hierfür ist die Herstellung aus Metall für den Spitzenhauptkörper 148 vorteilhaft, weil sich dadurch besonders exakte Geometrien und damit sichere und stabile Verbindungen herstellen lassen. Beispielhaft sei auf Figuren 6 und 7 verwiesen, die ein schienenartige Verbindung 158 (anders: Schienen-Mechanismus) oder eine Schwalbenschwanz-Verbindung 160 zeigen. Es sind auch andere Verbindungsarten wie eine Klebeverbindung oder eine Schrauben-, Bolzen, - und/oder Nietverbindung denkbar.

### Bezugszeichenliste

- 100: Windenergieanlage
- 102: Turm
- 104: Fundament
- 106: Gondel
- 108: Rotor
- 110: Rotorblatt
- 111: Rotorblatthauptkörper
- 112: Rotornabe
- 113: Rotorblatthohlraum
- 114: Rotorblattwurzelbereich
- 116: Übergangsbereich
- 118: Profilbereich
- 119: Rotorblattspitze
- 120: Längserstreckungsrichtung
- 122: Druckseite
- 124: Saugseite
- 126: Rotorblattanschlussende
- 128: Flanschanschluss
- 132: Profilquerschnitt
- 140: Profilendkante
- 142: Profilnasenkante
- 144: Profiltiefe
- 146: Profildicke
- 148: Spitzenhauptkörper
- 150: Endkantenelement
- 152: stromabwärtige Kante
- 153: Übergang
- 154: spitzenseitiges Ende
- 155: Krümmung
- 156: Abschnitt der Profilendkante
- 158: schienenartige Verbindung
- 160: Schwalbenschwanz-Verbindung
- A-A: Schnitt

## Patentansprüche

1. Rotorblatt (110) für eine Windenergieanlage (100), aufweisend einen Rotorblatthauptkörper (111) und eine an den Rotorblatthauptkörper (111) anschließende Rotorblattspitze (119), eine saugseitige Oberfläche (124), eine druckseitige Oberfläche (122) und eine Profilendkante (140),
wobei
- stromabwärtige Kanten (152) der saugseitigen Oberfläche (124) und der druckseitigen Oberfläche (122) an der Profilendkante (140) miteinander verbunden sind, und
- die Rotorblattspitze (119) ein flexibel ausgebildetes Endkantenelement (150) aufweist, welches bezüglich seiner Formgebung bündig an die äußere Kontur der saugseitigen Oberfläche (124) und der druckseitigen Oberfläche (122) des Rotorblattes (110) angepasst ist und einen Abschnitt (156) der Profilendkante (140) des Rotorblattes (110) bildet, so dass die Profilendkante (140) des Rotorblatts (110) an der Rotorblattspitze (119) in Richtung eines spitzenseitigen Endes (154) des Rotorblatts (110) monoton verläuft, wobei das Endkantenelement (150) frei von einer Profiltiefen-Erweiterung an der Profilendkante (140) ist, und wobei die Rotorblattspitze (119) separat zu dem Rotorblatthauptkörper (111) ausgebildet und mit dem Rotorblatthauptkörper (111) verbunden ist.

2. Rotorblatt (110) nach Anspruch 1, wobei zwischen dem Endkantenelement (150) und dem restlichen Rotorblatt (110) entlang der Profilendkante (140) ein im Wesentlichen nahtloser, insbesondere stufenloser, Übergang (153) ausgebildet ist.

3. Rotorblatt (110) nach einem der vorhergehenden Ansprüche, wobei der durch das Endkantenelement (150) gebildete Abschnitt (156) der Profilendkante (140) des Rotorblatts (110) eine Krümmung aufweist, die sich monoton ändert.

4. Rotorblatt (110) nach einem der vorhergehenden Ansprüche, wobei das Endkantenelement (150) aus einem Elastomer-Werkstoff gebildet ist.

5. Rotorblatt nach einem der vorhergehenden Ansprüche, wobei die Rotorblattspitze (119) aus einem elektrisch leitfähigen Material gebildet ist.

6. Rotorblatt nach einem der vorhergehenden Ansprüche, wobei das Endkantenelement (150) mittels Formschluss an der Rotorblattspitze (119) festgelegt ist.

7. Rotorblatt nach Anspruch 6, wobei das Endkantenelement (150) über ein Schienensystem (158), eine Feder-Nut Verbindung oder eine Schwalbenschwanz-Verbindung (160) an der Rotorblattspitze (119) festgelegt ist.

8. Rotorblatt nach einem der vorhergehenden Ansprüche, wobei die Profilendkante (140) des Rotorblatts (110) entlang einer Längsachse (120) des Rotorblatts (110) ausgehend von einer Position maximaler Profiltiefe (144) bis zum spitzenseitigen Ende (154) monoton verläuft.

9. Rotorblattspitze (119) für ein Rotorblatt einer Windenergieanlage (100), wobei die Rotorblattspitze (119)
- separat zu einem Rotorblatthauptkörper (111) des Rotorblatts (110) und mit dem Rotorblatthauptkörper (111) verbindbar ausgebildet ist, und
- ein flexibel ausgebildetes Endkantenelement (150) aufweist, welches bezüglich seiner Formgebung bündig an eine äußere Kontur einer saugseitigen Oberfläche (124) und einer druckseitigen Oberfläche (122) der Rotorblattspitze (119) angepasst ist und ausgebildet ist, einen Abschnitt (156) der Profilendkante (140) des Rotorblattes (110) zu bilden, wobei der Verlauf des Abschnitts (156) der Profilendkante (140) monoton ist,
wobei das Endkantenelement (150) frei von einer Profiltiefen-Erweiterung an der Profilendkante (140) ist.

## Claims

1. A rotor blade (110) for a wind turbine (100), comprising a rotor blade main body (111) and a rotor blade tip (119) adjoining the rotor blade main body (111), a suction-side surface (124), a pressure-side surface (122), and a profile trailing edge (140),
wherein
- downstream edges (152) of the suction-side surface (124) and the pressure-side surface (122) are connected to each other at the profile trailing edge (140), and
- the rotor blade tip (119) has a flexibly designed trailing edge element (150) which, in terms of its shape, is adapted to fit flush with the outer contour of the suction-side surface (124) and the pressure-side surface (122) of the rotor blade (110) and forms a section (156) of the profile trailing edge (140) of the rotor blade (110), so that the profile trailing edge (140) of the rotor blade (110) at the rotor blade tip (119) extends monotonically toward a tip-side end (154) of the rotor blade (110), wherein the trailing edge element (150) is free of a profile depth extension at the profile trailing edge (140), and wherein the rotor blade tip (119) is formed separately from the rotor blade main body (111) and is connected to the rotor blade main body (111).

2. The rotor blade (110) according to claim 1, wherein a substantially seamless, in particular stepless, transition (153) is formed between the trailing edge element (150) and the remainder of the rotor blade (110) along the profile trailing edge (140).

3. The rotor blade (110) according to any of the preceding claims, wherein the section (156) of the profile trailing edge (140) of the rotor blade (110) formed by the trailing edge element (150) has a curvature that changes monotonically.

4. The rotor blade (110) according to any of the preceding claims, wherein the trailing edge element (150) is formed from an elastomeric material.

5. The rotor blade according to any of the preceding claims, wherein the rotor blade tip (119) is formed from an electrically conductive material.

6. The rotor blade according to any of the preceding claims, wherein the trailing edge element (150) is fixed to the rotor blade tip (119) by means of a form fit.

7. The rotor blade according to claim 6, wherein the trailing edge element (150) is fixed to the rotor blade tip (119) by means of a rail system (158), a tongue-and-groove connection or a dovetail connection (160).

8. The rotor blade according to any of the preceding claims, wherein the profile trailing edge (140) of the rotor blade (110) extends monotonically along a longitudinal axis (120) of the rotor blade (110) from a position of maximum profile depth (144) to the tip-side end (154).

9. A rotor blade tip (119) for a rotor blade of a wind turbine (100), wherein the rotor blade tip (119)
- is formed separately from a rotor blade main body (111) of the rotor blade (110) and can be connected to the rotor blade main body (111), and
- has a flexibly designed trailing edge element (150) which, in terms of its shape, is adapted to fit flush with an outer contour of a suction-side surface (124) and a pressure-side surface (122) of the rotor blade tip (119) and is designed to form a section (156) of the profile trailing edge (140) of the rotor blade (110), wherein the course of the section (156) of the profile trailing edge (140) is monotonic,
wherein the trailing edge element (150) is free of a profile depth extension at the profile trailing edge (140).

## Revendications

1. Pale de rotor (110) pour une éolienne (100), comprenant un corps principal de pale de rotor (111) et une extrémité de pale de rotor (119) se raccordant au corps principal de pale de rotor (111), une surface côté aspiration (124), une surface côté pression (122) et un bord d'extrémité de profil (140),
sachant que
- des bords aval (152) de la surface côté aspiration (124) et de la surface côté pression (122) sont reliés entre eux au niveau du bord d'extrémité de profil (140), et
- l'extrémité de pale de rotor (119) comporte un élément de bord d'extrémité (150) de conception flexible, dont la forme est adaptée de manière affleurante au contour extérieur de la surface côté aspiration (124) et de la surface côté pression (122) de la pale de rotor (110), et qui forme une section (156) du bord d'extrémité de profil (140) de la pale de rotor (110), de sorte que le bord d'extrémité de profil (140) de la pale de rotor (110) s'étende de manière monotone au niveau de ladite extrémité de pale de rotor (119) en direction d'une extrémité côté pointe (154) de la pale de rotor (110), l'élément de bord d'extrémité (150) étant dépourvu d'élargissement de la profondeur de profil au niveau du bord d'extrémité de profil (140), et l'extrémité de pale de rotor (119) étant formée séparément par rapport au corps principal de pale de rotor (111) et reliée à celui-ci.

2. La pale de rotor (110) selon la revendication 1, sachant qu'une transition (153) essentiellement sans joint, en particulier continue, est formée entre l'élément de bord d'extrémité (150) et le reste de la pale de rotor (110) le long du bord d'extrémité de profil (140).

3. La pale de rotor (110) selon l'une quelconque des revendications précédentes, sachant que la section (156) du bord d'extrémité de profil (140) de la pale de rotor, formée par l'élément de bord d'extrémité (150), présente une courbure qui varie de manière monotone.

4. La pale de rotor (110) selon l'une quelconque des revendications précédentes, sachant que l'élément de bord d'extrémité (150) est formé d'un matériau élastomère.

5. La pale de rotor selon l'une quelconque des revendications précédentes, sachant que l'extrémité de pale de rotor (119) est formée d'un matériau électriquement conducteur.

6. La pale de rotor selon l'une quelconque des revendications précédentes, sachant que l'élément de bord d'extrémité (150) est fixé à l'extrémité de pale de rotor (119) par complémentarité de forme.

7. La pale de rotor selon la revendication 6, sachant que l'élément de bord d'extrémité (150) est fixé à l'extrémité de pale de rotor (119) par l'intermédiaire d'un système de rails (158), d'un assemblage à rainure et languette ou d'un assemblage en queue d'aronde (160).

8. La pale de rotor selon l'une quelconque des revendications précédentes, sachant que le bord d'extrémité de profil (140) de la pale de rotor (110) s'étend de manière monotone le long d'un axe longitudinal (120) de la pale de rotor (110), à partir d'une position de profondeur de profil maximale (144) jusqu'à l'extrémité côté pointe (154).

9. Extrémité de pale de rotor (119) pour une pale de rotor d'une éolienne (100), l'extrémité de pale de rotor (119)
- étant conçue séparément du corps principal de pale de rotor (111) de la pale de rotor (110) et pouvant être reliée au corps principal de pale de rotor (111), et
- comportant un élément de bord d'extrémité (150) de conception flexible, dont la forme est adaptée de manière affleurante au contour extérieur d'une surface côté aspiration (124) et d'une surface côté pression (122) de l'extrémité de pale de rotor (119), et qui est conçu pour former une section (156) du bord d'extrémité de profil (140) de la pale de rotor (110), le tracé de la section (156) du bord d'extrémité de profil (140) étant monotone,
l'élément de bord d'extrémité (150) étant dépourvu d'élargissement de la profondeur de profil au niveau du bord d'extrémité de profil (140).
